# EUROPEAN PATENT APPLICATION

(11) **EP 3 043 335 A1**
(43) Date of publication of application: **13.07.2016**
(21) Application number: 14842331.2
(22) Date of filing: 19.08.2014
(51) Int. Cl.: G09F 3/02, G02C 7/02

(54) **LABEL FOR IDENTIFYING GENUINE ARTICLE USING PLURALITY OF NANOSTRUCTURES AND THREE-DIMENSIONAL LENS**

(30) Priority: 04.09.2013 KR 20130106340
(71) Applicant: An, Jaekwang, Anyang-si, Gyeonggi-do 430-856 (KR); Lentech Korea Co. Ltd., Anyang-si, Gyeonggi-do 430-731 (KR)
(72) Inventor: AN, Jaekwang, Anyang-si Gyeonggi-do 430-856 (KR)
(74) Representative: Nordic Patent Service A/S
(86) International application number: PCT/KR2014/007700
(87) International publication number: WO 2015/034190

(57) **Abstract**

The present invention relates to a label for identifying a genuine article using a plurality of nanostructures and a three-dimensional lens, the label comprising: an identification mark forming part including a three-dimensional lens layer that includes a lenticular lens having a plurality of semi-cylindrical convex lens arranged in parallel or a microlens having a plurality of semicircular convex lenses sequentially arranged, a focal distance layer disposed under the three-dimensional lens layer, and an image-forming layer disposed under the focal distance layer; and a coupling member for coupling the identification mark forming part to an article, wherein the image-forming layer includes an assembly in which a plurality of nanostructures protruding at heights and intervals of 50 to 200 nanometers is periodically and regularly arranged, and a medium having a refractive index different from the refractive indices of the nanostructures and the focal distance layer is disposed between the nanostructures and the focal distance layer.

## Description

### Technical Field

The present invention relates to a label for identifying a genuine article and, more particularly, to a label for identifying a genuine article using a plurality of nanostructures and a three-dimensional lens.

### Background Art

A label, which is a piece of paper or other material on which a product name, a trademark, or information about an article are written, is generally used to show the origin of an article or the contents, quality, and components of a product. Further, a label can provide the function of authentication by showing the specific origin of an article. Recently, illegal imitations of expensive brand-name items are frequently in circulation, so various methods have been developed of discriminating genuine articles from illegal imitations to prevent the illegal circulation. As a way of discriminating genuine articles, labels are manufactured by metal layering or laser engraving so that other people cannot easily forge them. However, it is possible to imitate those labels without difficulty due to developments in the printing or metal layering technology, so the purpose of the labels cannot be sufficiently accomplished.

Accordingly, new types of label manufacturing technologies, including a label by printing that changes colors due to heat (see Korean Patent Application No. 10-2005-0032390) have been developed. Further, a technology of showing a trademark only at a specific viewing angle by making a label using a hidden image that is not shown in a normal state, but is shown in a specific state have been developed. Therein a method of showing a hidden image, which prints an image on a transparent or translucent substrate such that specific information cannot be easily shown using saturation or luminosity and then exposes the substrate to light of a monitor (changes into a specific state) so the hidden information can be shown (see U.S. Patent No. 5,984,367). That is, in the related art, hidden images were shown by using a difference in saturation or luminosity of a background and the image painted with dyes or pigments or by giving a complicated pattern or symbol to the background or image to induce an optical illusion.

However, labels printed using dyes or pigments in the related art show just two-dimensional images and the dyes or pigments may change colors due to ultraviolet rays. Therefore, the inventor(s) has developed a method of showing an image without using a dye or a pigment and a new type of label for identifying a genuine article by applying the method to a three-dimensional lens.

### Description

### Technical Problem

The present invention is directed to providing a label for identifying a genuine article using a plurality of nanostructures and a three-dimensional lens, the label being composed of an identification mark forming part including a three-dimensional lens layer, a focal distance layer, and an image forming layer, and a coupling member, in which the image forming layer of the identification mark forming part includes an assembly in which a plurality of nanostructures protruding at heights and intervals of 50 to 200 nanometers is periodically and regularly arranged, and medium having a refractive index different from the refractive indices of the nanostructures and the focal distance layer is disposed between the nanostructures and the focal distance layer. Accordingly, it is possible to achieve an image with desired color and shape only by structural designing without using a dye or a pigment on one plate without overlap of colors and shapes at a nano-scale of 10 micron or less, and one color or whole natural colors can be implemented in the structural design, so a precise label can be manufactured. Therefore, the problem of imitation of a label can be prevented.

Further, the present invention is directed to providing a label for identifying a genuine article using a plurality of nanostructures and a three-dimensional lens, the label including: a hidden image forming part that has nanostructures to show an image only at predetermined viewing angle and predetermined viewing focal distance; and a common image forming part that has nanostructures to show an image at angles and focal distances other than the predetermined angle and predetermined focal distance for the hidden image forming part. Accordingly, one or more selected from the group including characters, symbols, and patterns showing an article are shown in the hidden image forming part, so an identification mark is shown only at a specific viewing angle, and accordingly, the label can be used as a decoration with various images at common angles.

### Technical Solution

One aspect of the present invention provides a label for identifying a genuine article using a plurality of nanostructures and a three-dimensional lens, the label including: an identification mark forming part including a three-dimensional lens layer that includes a lenticular lens having a plurality of semi-cylindrical convex lens arranged in parallel or a microlens having a plurality of semicircular convex lenses sequentially arranged, a focal distance layer disposed under the three-dimensional lens layer, and an image forming layer disposed under the focal distance layer; and a coupling member for coupling the identification mark forming part to an article, in which the image forming layer includes an assembly in which a plurality of nanostructures protruding at heights and intervals of 50 to 200 nanometers is periodically and regularly arranged, and a medium having a refractive index different from the refractive indices of the nanostructures and the focal distance layer is disposed between the nanostructures and the focal distance layer.

Preferably, in the identification mark forming part, the height of the plurality of nanostructures may be smaller than the pitch of the nanostructures, and the pitch, height, and shape of the nanostructures may be made to correspond to the color to be shown by a wavelength that is reflected when natural light is radiated to the nanostructures.

Preferably, the image forming layer of the identification mark forming part may include: a hidden image forming part that has nanostructures to show an image only at predetermined viewing angle and predetermined viewing focal distance; and a common image forming part that has nanostructures to show an image at angles and focal distances other than the predetermined angle and predetermined focal distance for the hidden image forming part.

More preferably, the hidden image forming part may include nanostructures formed such that one or more selected from the group including characters, symbols, and patterns showing an article are shown at a predetermined viewing angle and a predetermined viewing focal distance.

Preferably, the nanostructures may be manufactured from at least one member selected from the group comprising PET (Polyethylene terephthalate), PC (Polycarbonate), UV Resin, epoxy resin, and acryl resin. Air or a vacuum state may exist between the nanostructures and the focal distance layer.

Preferably, the identification mark forming part may further include a flat coating layer provided to make the top of the three-dimensional lens layer flat.

Preferably, the identification mark forming part may further include a light block layer under the image-forming layer.

Preferably, the three-dimensional lens layer of the identification mark forming part may include a first lenticular lens having a plurality of semi-cylindrical convex lenses arranged in parallel and a second lenticular lens having a curved surface facing the first lenticular lens, and the centerlines of the semi-cylindrical convex lenses of the first lenticular lens and the second lenticular lens may cross each other.

Preferably, the coupling member may include an adhesive or a connection ring and the label for identifying a genuine article may be used to check whether an article is a genuine article by being attached to one or more selected from the group including a watch, a hat, a bag, a piece of clothes, a bottle, and an electronic device.

Preferably, the coupling member may have an adhesive layer, the identification mark forming part may have a separation film thereon, and the label for identifying a genuine article may be transcribed on an article.

### Advantageous Effects

Accordingly, a three-dimensional lens sheet including a plurality of nanostructures and showing a hidden image is composed of an identification mark forming part including a three-dimensional lens layer, a focal distance layer, and an image forming layer, and a coupling member, in which the image forming layer of the identification mark forming part includes an assembly in which a plurality of nanostructures protruding at heights and intervals of 50 to 200 nanometers is periodically and regularly arranged, and a medium having a refractive index different from the refractive indices of the nanostructures and the focal distance layer is disposed between the nanostructures and the focal distance layer. Accordingly, it is possible to achieve an image with desired color and shape only by structural designing without using a dye or a pigment on one plate without overlap of colors and shapes in a nano-scale of 10 micron or less, and one color or whole natural colors can be implemented in the structural design, so a precise label can be manufactured. Therefore, the problem of imitating a label can be prevented.

Further, according to the present invention, it includes: a hidden image forming part that has nanostructures to show an image only at predetermined viewing angle and predetermined viewing focal distance; and a common image forming part that has nanostructures to show an image at angles and focal distances other than the predetermined angle and predetermined focal distance for the hidden image forming part. Accordingly, one or more elements selected from the group including characters, symbols, and patterns showing an article are shown in the hidden image forming part, so an identification mark is shown only at a specific viewing angle, and accordingly, the label can be used as a decoration with various images at common angles.

### Description of Drawings

FIG. 1 is a view showing a label for identifying a genuine article using a plurality of nanostructures and a three-dimensional lens according to an embodiment of the present invention.
FIG. 2 is a view showing an image-forming layer in the label for identifying a genuine article using a plurality of nanostructures and a three-dimensional lens according to an embodiment of the present invention.
FIG. 3 is a view showing a detailed configuration of an image-forming layer in a label for identifying a genuine article using a plurality of nanostructures and a three-dimensional lens according to another embodiment of the present invention.
FIG. 4 is a view showing a label for identifying a genuine article using a plurality of nanostructures and a three-dimensional lens according to another embodiment of the present invention.
FIG. 5 is a view showing a label for identifying a genuine article using a plurality of nanostructures and a three-dimensional lens according to another embodiment of the present invention.
FIGS. 6 to 8 are views showing a label for identifying a genuine article using a plurality of nanostructures and a three-dimensional lens according to an embodiment of the present invention, which is attached to an article in use.

### Modes of the Invention

Embodiments of the present invention will be described in detail with reference to the accompanying drawings enabling those skilled in the art to perform the present invention. However, in describing the present invention, well-known functions or constructions will not be described in detail since they may unnecessarily obscure the understanding of the present invention. Further, the components having similar functions and actions are indicated by the same or similar reference numerals throughout the drawings.

Throughout the specification, it should be understood that when one element is referred to as being "connected to" another element, it can be "connected directly to" another element or connected indirectly to another element, with the other element there between. Further, unless explicitly described otherwise, "comprising" any components will be understood to imply the inclusion of other components rather than the exclusion of any other components.

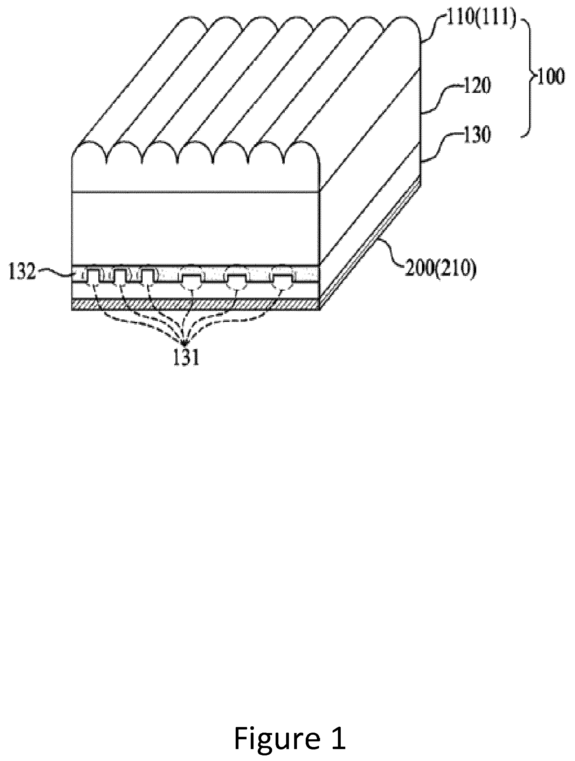

FIG. 1 is a view showing a label for identifying a genuine article using a plurality of nanostructures and a three-dimensional lens according to an embodiment of the present invention. As shown in FIG. 1, a label for identifying a genuine article using a plurality of nanostructures and a three-dimensional lens according to an embodiment of the present invention may include: an identification mark forming part 100 including a three-dimensional lens layer 110, a focal distance layer 120, and an image forming layer 130; and a coupling member 200 for coupling the identification mark forming part 100 to an article.

The identification mark forming part 100 forms an identifying mark on an article, whereon the label for identifying the genuine article is attached, and can be constructed as a three-dimensional image using a three-dimensional lens, and/or a plurality of nanostructures, in the present invention. According to the structure of the identification mark forming part 100 proposed in the present invention, colors and patterns can be shown on one plate in a nano-scale of 10 micron or less without overlapping, and single colors or whole natural colors can be implemented in the structural design, so a precise label can be manufactured. Accordingly, the label proposed in the present invention cannot be easily forged technically and economically, so it can sufficiently provide the function of authentication.

The three-dimensional lens is a lenticular lens or microlens, which reproduces a 2D image into 3D image using an optical illusion by binocular disparity. Methods of showing a three-dimensional image using a three-dimensional lens in the related art have used a three-dimensional effect and various conversion effects of an image by applying a lenticular lens or a microlens to an image made by a dye or a pigment. That is, the most important factor of the three-dimensional effect is binocular disparity due to the distance of about 65 mm between two eyes of people, so when a three-dimensional lens is used, some images are blocked and light selectively travels forward, and accordingly, an effect of a 3D image can be obtained from a 2D image. According to a three-dimensional lens, an image is shown through a printed layer of a dye or a pigment under a lens layer, but this method of showing an image using a dye or a pigment has a problem in that the dye or the pigment is changed in color by ultraviolet rays. Further, when a three-dimensional shape is obtained through a three-dimensional lens on a printed surface, dot patterns overlap each other, so it is difficult to obtain a desired image.

On the other hand, butterflies and the feathers of birds show specific colors even without a pigment, because light is diffracted, interfered, and dispersed by specific structures. That is, when light is radiated to fine wrinkles or regularly arranged structures, light with specific wavelengths is only reflected and the colors of the wavelengths are shown. The inventor(s) has developed a method of showing a three-dimensional color image that is precise and not deformed, by designing a structure without using a dye or a pigment in consideration of such structure-colors, and with the intention for the method to be applied to a label for identifying a genuine article. The detailed configuration of the identification mark forming part is described hereafter.

The three-dimensional lens layer 110 may include a lenticular lens 111 having a plurality of semi-cylindrical convex lenses arranged in parallel or a microlens 112 having a plurality of semicircular convex range sequentially arranged. The convex lenses may have a predetermined refractive index and a non-spherical cross-section. According to an embodiment of the present invention, unlike common three-dimensional lens layers, the cross-section may be formed in a non-spherical shape having a very high angle of view. According to this configuration, when a flat coating layer 140 having a low refractive index is applied on the surface of a lens, two refractive indices are provided, so the problem with a narrow angle of image can be removed. Further, the non-spherical cross-section allows for adjustment of a focal distance. When the power of a lens increases, the focal distance decreases, and when the power decreases, the focal distance increases, so it is required to increase the power in order to make a lens thin.

The focal distance layer 120 is disposed under the three-dimensional lens layer 110 and can fit a focal distance corresponding to a radius of curvature. That is, it is possible to manufacture the focal distance layer 120 having an appropriate thickness in accordance with the curvature and thickness of the three-dimensional lens layer 110, the size of an image, and the size and position of a three-dimensional color image to be shown.

The image-forming layer 130 is disposed under the focal distance layer 120 and includes an assembly where a plurality of nanostructures 131, protruding at heights and intervals of 50 to 200 nanometers, is periodically and regularly arranged, in which another medium 132 having a refractive index different from the nanostructures 131 and the focal distance layer 120 may be disposed between the nanostructures 131 and the focal distance layer 120.

Preferably, the height of the plurality of nanostructures 131 may be smaller than the pitch of the nanostructures 131. More preferably, the height of the nanostructures 131 may be 30 to 100 nm and the pitch of the nanostructures 131 may be 150 to 200 nm.

The pitch, height, and shape of the nanostructures 131 may be made to correspond to the color to be shown by a wavelength that is reflected when natural light is radiated to the nanostructures 131. That is, the nanostructures 131 have a predetermined pitch and a predetermined height, and the pitch and height may depend on a pattern or color reference according to a light reflection wavelength.

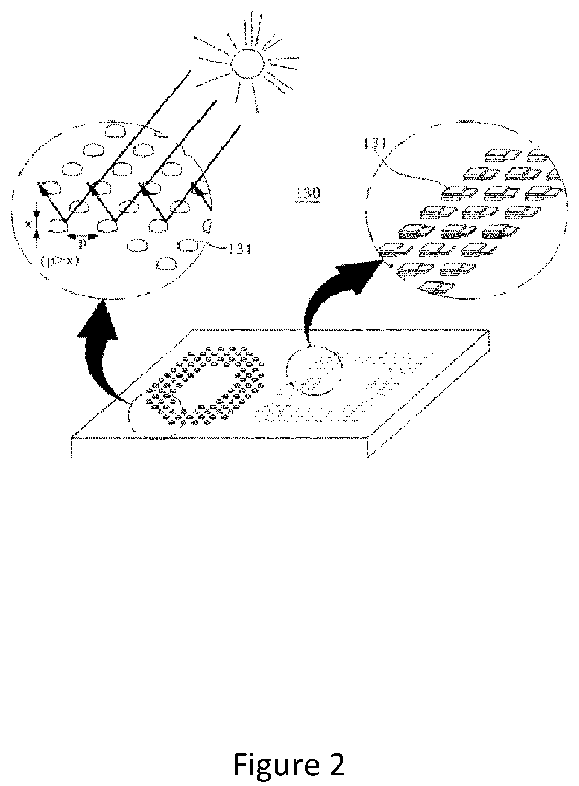

FIG. 2 is a view showing an image-forming layer in the label for identifying a genuine article using a plurality of nanostructures and a three-dimensional lens according to an embodiment of the present invention. As shown in FIG. 2, light is refracted or reflected by the nanostructures 131 and a specific pattern may be recognized by the reflected light. Further, some or all of the plurality of nanostructures 131 may be formed by stacking a plurality of nanostructures 131, and the stacked structures may be made of materials having different refractive indices, respectively, and, as shown in FIG. 2, may be stacked alternately within a predetermined width. The shape of the nanostructures 131 of FIG. 2 is just an embodiment and the present invention is not limited thereto, and various nanoscale structures may be formed and an image according to a light reflection wavelength may be made.

In the label for identifying a genuine article using a plurality of nanostructures and a three-dimensional lens according to an embodiment of the present invention, the nanostructures 131 may be manufactured from one or more elements selected from the group comprising PET (Polyethylene terephthalate), PC (Polycarbonate), UV Resin, epoxy resin, and acryl resin. Further, air or a vacuum state may exist between the nanostructures 131 and the focal distance layer 120. When air is present or a vacuum state is created, there is a need for an external coating portion (not shown) around the edge of the three-dimensional lens sheet.

The present invention employs a way of showing an image by designing the structure of the nanostructures 131 wherein the three-dimensional lens layer 110 and the focal distance layer 120 are combined and formed over the image-forming layer 130, so the nanostructures 131 are formed in a label and accordingly, the shape thereof can be maintained and protected from an external environment even without a specific protective layer. That is, since the present invention employs a structure in which the three-dimensional layer 110 is disposed over the nanostructures 131, it is possible to manufacture very reliably and effectively a precise three-dimensional image.

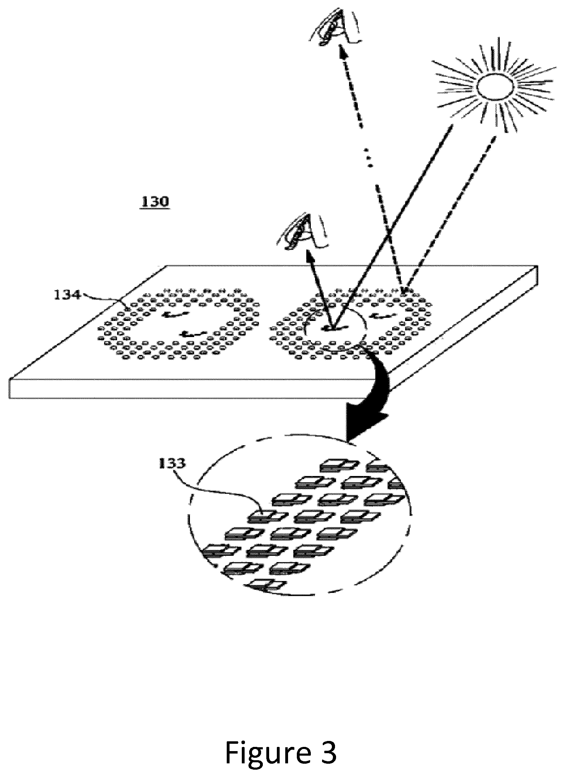

FIG. 3 is a view showing a detailed configuration of an image-forming layer in a label for identifying a genuine article using a plurality of nanostructures and a three-dimensional lens according to another embodiment of the present invention. As shown in FIG. 3, according to this another embodiment of the present invention, the image forming layer 130 is divided into a hidden image forming part 133 and a common image forming part 134, so that identification marks are shown only at a specific viewing angle and viewing focal distance. Thereby the label can be used as a decoration with various images at common viewing angles. In detail, the image forming layer 130 may include the hidden image forming part 133 that has nanostructures to show an image only at a predetermined viewing angle and predetermined viewing focal distance and a common image forming part 134 that has nanostructures 131 to show an image at angles and focal distances other than the predetermined angle and predetermined focal distance for the hidden image forming part 133.

Preferably, the hidden image-forming part 133 may include nanostructures 131 formed such that one or more elements selected from the group comprising characters, symbols, and patterns, are shown at a predetermined viewing angle and predetermined viewing focal distance. That is, as shown in FIG. 3, various images that can provide an aesthetic feel are made at a common viewing angle and an identification mark (a hidden image) is shown only when a person looks at a label at a very close distance, so authentication function and aesthetic function can both be achieved.

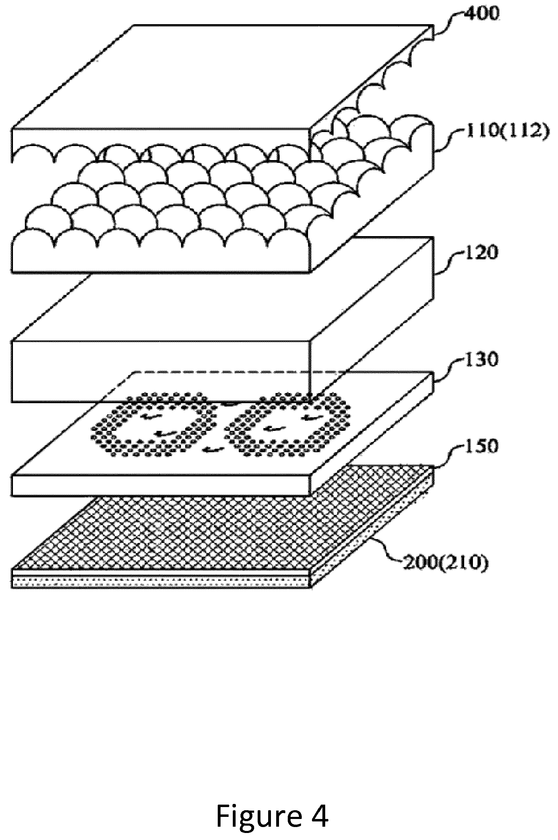

FIG. 4 is a view showing a label for identifying a genuine article using a plurality of nanostructures and a three-dimensional lens according to another embodiment of the present invention. As shown in FIG. 4, an identification mark forming part 100 of the label for identifying a genuine article according to an embodiment of the present invention may further include a flat coating layer 140 provided to make the top of the three-dimensional lens layer 110 flat. The three-dimensional lens layer 110, as described above, is provided to achieve a two-dimensional image effect using binocular disparity and allows bending on the lenticular lens 111 or the microlens 112. Accordingly, the lens surface is easily contaminated and friction is frequently generated only at the convex portion, so the degree of wear is different at different portions of the lens and a curvature different from the original curvature is made, and accordingly, it may not sufficiently function as a three-dimensional lens. According to another embodiment of the present invention, the flat coating layer 140 is further provided on the top forming a curved surface of the three-dimensional lens layer 110, thereby solving the problem. It is preferable that the flat coating layer 140 is made of transparent resin having a refractive index different from that of the three-dimensional lens layer 110 to maintain refraction due to the bending of the three-dimensional lens layer 110 and keep the surface flat.

Further, an identification mark forming part 100 of the label for identifying a genuine article according to another embodiment of the present invention may further include a light block layer 150 under the image-forming layer 130. As described above with reference to FIG. 2, since an image is made by a color shown by light reflecting from the nanostructures 131, it is possible to use the reflection effect of light efficiently by further disposing the light block layer 150 at the lower portion.

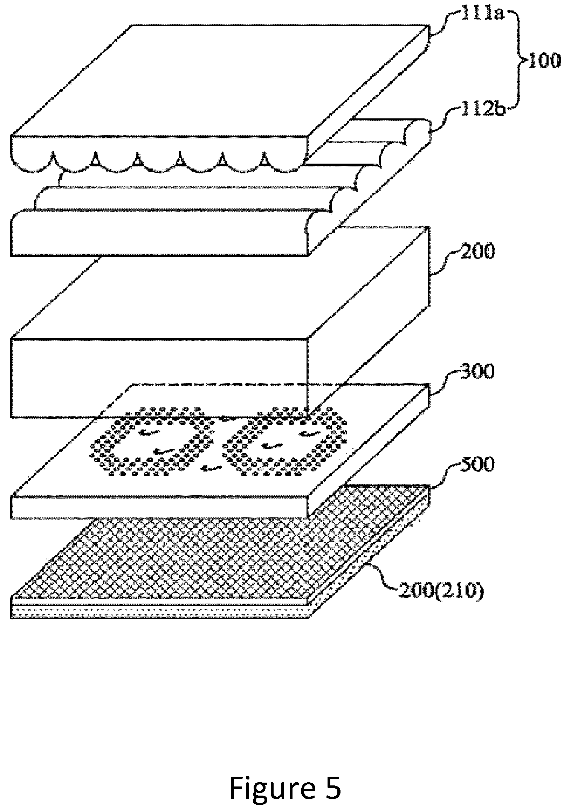

FIG. 5 is a view showing a label for identifying a genuine article using a plurality of nanostructures and a three-dimensional lens according to another embodiment of the present invention. As shown in FIG. 5, the three-dimensional lens layer 110 of the identification mark forming part 100 includes a first lenticular lens 111a having a plurality of semi-cylindrical convex lenses arranged in parallel and a second lenticular lens 111b having a curved surface facing the first lenticular lens 111a, in which the centerlines of the semi-cylindrical convex lenses of the first lenticular lens 111a and the second lenticular lens 111b may cross each other.

The common semi-cylindrical lenticular lens 111 has a three-dimensional effect that is shown in a vertical pattern-binocular disparity type, but the radial microlens 112 can ensure a four directional pattern-binocular disparity. In another embodiment of the present invention, it is possible to achieve a three-dimensional effect in various directions by arranging the centerlines of two lenticular lenses 111a and 111b facing each other such that their centerlines cross each other. That is, it is possible to make the top of a lens flat without a specific flat coating layer 140 and achieve the effect of a microlens 112 too. The centerlines may cross each other at 45, 60, or 90 degrees, but the present invention is not limited thereto and the angle may be changed in accordance with the embodiments.

The coupling member 200 may couple the identification mark forming part 100 to an article. Depending on embodiment, the coupling member may include an adhesive 210 or a connection ring 220 and the label for identifying a genuine article may be used to check whether an article is a genuine article by being attached to one or more selected from the group including a watch, a hat, a bag, a piece of clothes, a bottle, and an electronic device.

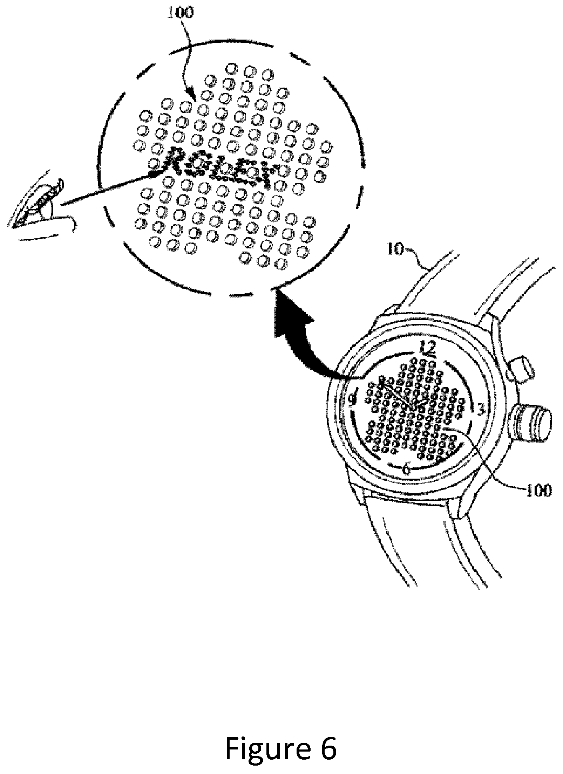

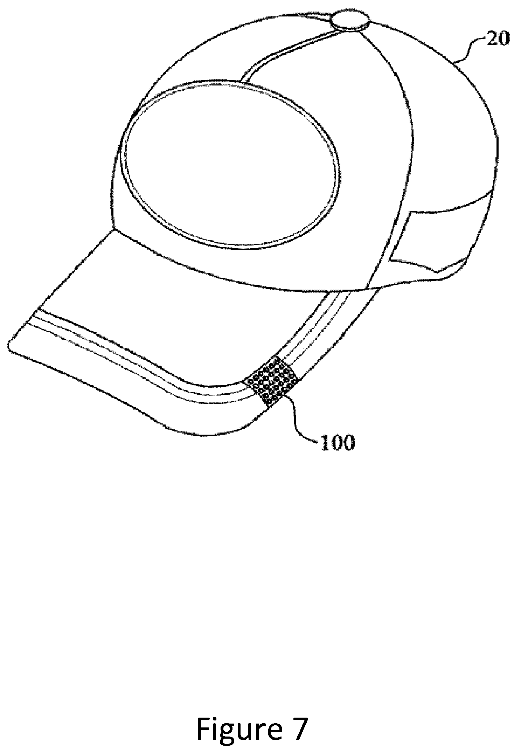

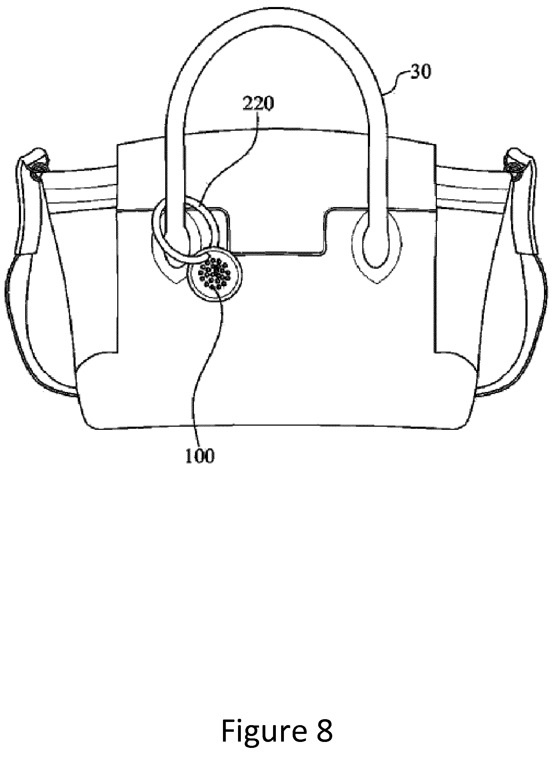

FIGS. 6 to 8 are views showing a label for identifying a genuine article using a plurality of nanostructures and a three-dimensional lens as according to an embodiment of the present invention, which is attached to an article in use. As shown in FIG. 6, the label for identifying a genuine article proposed in the present invention may be attached to a bottom adhesive 210 in a watch 10 and show a specific pattern, and may show an identification mark of the article when a person looks at it at a close distance. Further, as shown in FIG. 7, the label may be sawn to a side of a hat 20, and as shown in FIG. 8, it may be coupled to a bag 30 by a connection ring 220 as a kind of decoration.

According to another embodiment of the present invention, the coupling member 200 may have an adhesive layer, the identification mark forming part 100 may have a separation film thereon, and the label for identifying a genuine article may be transcribed on an article.

The adhesive layer may be formed under the image-forming layer 130 or the light block layer 150 of the identification mark forming part 100 and may fix the label for identifying a genuine article to an article. Depending on embodiments, well known various heat-sensitive or pressure-sensitive resins may be used, and in detail, polyacryl-based resin, polystyrene-based resin, polyamide-based resin, chlorinated polyolefin-based resin, chlorinated ethylene-acetic vinyl copolymer resin, or rubber-based resin may be used.

The separation film is separated after being attached to an article and may be disposed on the top of the identification mark forming part 100. Depending on embodiments, the separation film may be achieved using a resin film of polypropylene-based resin, polyethylene-based resin, polyamide-based resin, polyester-based resin, polyacryl-based resin, or polyvinyl chloride-based resin, as a main material, a metal film such as an aluminum film or a copper film, a cellulose-based sheet such as a glycine paper, a coat paper, or a cellophane, or a composite sheet of two or more of them as a base material, and by forming a separation layer through separation treatment on a side of the base material. The separation treatment for forming the separation layer is not specifically limited, and for example, various printing methods or coat methods using epoxy-based, epoxy-melamine-based, amino-alkyd-based, acryl-based, melamine-based, silicon-based, fluorine-based, cellulose-based, urea resin-based, polyolefin-based, or paraffin-based material, or composite separation materials including two or more of them may be used.

According to the label for identifying a genuine article proposed in the present invention, a transcribing material may be formed by further including the adhesive layer and the separation film and can be applied to the surface of a desired article.

In the label for identifying a genuine article according to an embodiment of the present invention, the adhesive layer is put close to an article, heat and pressure is applied to the separation film by a transcriber such as a thermal resistance rubber elastic body at the temperature of about 80° to 260° and the pressure of 50 kg/m2 to 200 kg/m2, and then the separation film is separated after cooling. Accordingly, separation occurs at the interface between the top of the identification mark forming part 100 and the separation film and the label for identifying a genuine article can be formed on the surface of the article. This embodiment is exemplary and the label for identifying a genuine article may be formed onto an article in various ways such as injection molding.

The present invention described above may be changed and modified in various ways by those skilled in the art and the scope of the present invention should be determined by the following claims.

## Claims

1. A label for identifying a genuine article using a plurality of nanostructures and a three-dimensional lens, the label comprising:
an identification mark forming part including a three-dimensional lens layer that includes a lenticular lens having a plurality of semi-cylindrical convex lens arranged in parallel or a microlens having a plurality of semicircular convex lenses sequentially arranged, a focal distance layer disposed under the three-dimensional lens layer, and an image-forming layer disposed under the focal distance layer; and
a coupling member for coupling the identification mark forming part to an article,
wherein
the image-forming layer includes an assembly in which a plurality of nanostructures protruding at heights and intervals of 50 to 200 nanometers is periodically and regularly arranged, and
a medium having a refractive index different from the refractive indices of the nanostructures and the focal distance layer is disposed between the nanostructures and the focal distance layer.

2. The label of claim 1, wherein in the identification mark forming part, the height of the plurality of nanostructures is smaller than the pitch of the nanostructures, and
the pitch, height, and shape of the nanostructures are made to correspond to the color to be shown by a wavelength that is reflected when natural light is radiated to the nanostructures.

3. The label of either claim 1 or claim 2, wherein the image-forming layer of the identification mark forming part comprises:
a hidden image forming part that has nanostructures to show an image only at a predetermined viewing angle and predetermined viewing focal distance; and
a common image forming part that has nanostructures to show an image at angles and focal distances other than the predetermined angle and predetermined focal distance for the hidden image forming part.

4. The label of claim 3, wherein the hidden image forming part comprises nanostructures formed such that one or more element selected from the group including characters, symbols, and patterns showing an article, are shown at a predetermined viewing angle and predetermined viewing focal distance.

5. The label according to anyone of the preceding claims, wherein the nanostructures are manufactured from one or more element selected from the group comprising PET (Polyethylene terephthalate), PC (Polycarbonate), UV Resin, epoxy resin, and acryl resin, and
air or a vacuum state is present between the nanostructures and the focal distance layer.

6. The label according to anyone of the preceding claims, wherein the identification mark forming part further includes a flat coating layer provided to make the top of the three-dimensional lens layer flat.

7. The label according to anyone of the preceding claims, wherein the identification mark forming part further comprises a light block layer under the image forming layer.

8. The label according to anyone of the preceding claims, wherein the three-dimensional lens layer of the identification mark forming part comprises a first lenticular lens having a plurality of semi-cylindrical convex lenses arranged in parallel and a second lenticular lens having a curved surface facing the first lenticular lens, and
the centerlines of the semi-cylindrical convex lenses of the first lenticular lens and the second lenticular lens cross each other.

9. The label according to anyone of the preceding claims, wherein the coupling member includes an adhesive or a connection ring, and
the label for identifying a genuine article is used to check whether an article is a genuine article by being attached to one or more selected from the group including a watch, a hat, a bag, a piece of clothes, a bottle, and an electronic device.

10. The label according to anyone of the preceding claims, wherein the coupling member has an adhesive layer,
the identification mark forming part has a separation film thereon, and
the label for identifying a genuine article is formed on the surface of an article.
